(19)

**Europäisches Patentamt**

**European Patent Office**

**Office européen des brevets**

(11) **EP 4 293 382 B1**

(12) # EUROPEAN PATENT SPECIFICATION

(45) Date of publication and mention
of the grant of the patent:
**31.12.2025 Bulletin 2026/01**

(21) Application number: **22179578.4**

(22) Date of filing: **17.06.2022**

(51) International Patent Classification (IPC):
**G01S 7/40** *(2006.01)*

(52) Cooperative Patent Classification (CPC):
**G01S 7/4026**

(54) **METHOD AND CONTROL UNIT FOR INTRINSIC CALIBRATION OF A RADAR DEVICE FOR A VEHICLE**

VERFAHREN UND STEUEREINHEIT ZUR INTRINSISCHEN KALIBRIERUNG EINER RADARVORRICHTUNG FÜR EIN FAHRZEUG

PROCÉDÉ ET UNITÉ DE COMMANDE POUR L'ÉTALONNAGE INTRINSÈQUE D'UN DISPOSITIF RADAR POUR VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.12.2023 Bulletin 2023/51**

(73) Proprietors:
• **VOLKSWAGEN AG**
**38440 Wolfsburg (DE)**
• **Fraunhofer-Gesellschaft zur Förderung der angewandten Forschung e.V.**
**80686 München (DE)**

(72) Inventors:
• **Kurz, Heiko Gustav**
**30177 Hannover (DE)**
• **Meinecke, Marc-Michael**
**38524 Sassenburg (DE)**
• **Mateos-Nunez, David**
**53173 Bonn (DE)**
• **Simoni, Renato**
**53111 Bonn (DE)**
• **González-Huici, María Antonia**
**53123 Bonn (DE)**
• **Greiff, Christian**
**53179 Bonn (DE)**

(56) References cited:
**WO-A2-2005/052630     CN-A- 106 443 610**
**CN-A- 112 649 799     CN-A- 113 189 592**
**US-A1- 2022 011 423**

• **TIAN XIANZHONG ET AL: "Pragmatic Approach to Phase Self-Calibration for Planar Array Millimeter-Wave MIMO Imaging", IEEE TRANSACTIONS ON INSTRUMENTATION AND MEASUREMENT, IEEE, USA, vol. 70, 22 October 2020 (2020-10-22), pages 1 - 11, XP011828772, ISSN: 0018-9456, [retrieved on 20201224], DOI: 10.1109/TIM.2020.3031167**

**Description**

The invention relates to a method for intrinsic calibration of a radar device for a vehicle. Furthermore, the invention relates to a control unit to perform such a method, a vehicle, wherein the vehicle comprises a radar device and such a control unit, and a computer program product to carry out such a method.

A vehicle can comprise a radar device as a detection system to determine a distance, an angle and/or a velocity of an object in surroundings of the vehicle in relation to the radar device. The object may be referred to as target. The object is positioned in a coverage area of the radar device. The radar device of the vehicle may be a multiple input multiple output (MIMO) radar array system comprising multiple transmitting antenna elements and multiple receiving antenna elements. Each antenna element comprises an antenna and an antenna channel. The respective antenna is a front-end part of the respective antenna element constructed to transmit or receive electromagnetic waves in the radio or microwave domain. The antenna channel comprises all further components of the respective antenna element which are in particular electronic components such as an analog-to-digital converter (ADC) and/or a mixer. Radio waves transmitted by the transmitting antenna elements are reflected by the object in the surroundings of the vehicle. The back signals, meaning the reflected radio waves, are received by the receiving antenna elements and give information about the object's location and speed. The word "radar" is an abbreviation and stands for radio detection and ranging.

The data on the object in the surroundings of the vehicle provided by the radar device can, for example, be used by a driver assistance system such as a lane assistant. However, in order to provide reliable radar data for the driver assistance system, the radar device needs to be calibrated accurately.

There are different ways to calibrate a radar device. In general, there are extrinsic and intrinsic calibration methods. Extrinsic calibration refers to an analog or digital alignment and/or transformation of coordinates between different radar device estimates, whereas intrinsic calibration comprises that intrinsic calibration parameters are directly involved in obtaining a focused estimate in the first place. For example, in radar digital beamforming information on accurate antenna positions of transmitting and receiving antenna elements as well as channel phase imbalances are necessary to perform angular processing of radar data. This means that information on antenna positions and channel phase imbalances are part of a model to match hypotheses of angle data with measurement data of the radar device. Without a precise model, the digital beamforming output does not provide focused digital main lobes in the positions of the object and the digital side lobes are high compared to the main lobes. The goal of intrinsic calibration is therefore the estimation of an observation model that accurately represents the measurement of the radar device up to the unknown parameter of interest, in particular azimuth and elevation angles. Usually a parametric model is desirable to reduce degrees of freedom.

US 2015/0139046 A1 discloses a communication device operating in time division duplex mode using multiple antennas. The communication device uses receive channel estimation measurements to perform transmit beamforming and MIMO transmission, based on self-calibration of the various up/down paths via a method of transmission and reception between its own antennas, thus achieving reciprocity mapping between up and down links. Either user equipment or a base station may routinely perform this self-calibration to obtain the most current correction factor for the channel reciprocity.

DE 10 2019 200 612 A1 discloses a device for calibrating a MIMO radar sensor comprising: ascertaining a model error for each target of a number of targets and selecting a target from the number of targets on the basis of an ascertained model error, wherein the model error of the selected target is minor in comparison with the model errors of the other targets. Calibration coefficients are determined which compensate for the difference between channel data and model data.

DE 10 2020 008 040 A1 discloses a radar receiving system and method for compensating for phase error between radar receiving circuits. The radar receiving system comprises a first receiving circuit comprising a first plurality of antennas and configured to receive a first plurality of received signals via the first plurality of antennas and a second receiving circuit comprising a second plurality of antennas and configured to receive a second plurality of received signals via the second plurality of antennas.

CN 113 189 592 A discloses a vehicle-mounted millimeter wave MIMO radar angle measurement method considering amplitude-phase mutual coupling errors, which simultaneously considers the problem of amplitude-phase and mutual coupling joint errors of transmitting and receiving antenna arrays.

CN 112 649 799 A discloses a method for correcting amplitude and phase errors of an MIMO radar, which applies a particle swarm optimization algorithm to the angular positioning and amplitude-phase error correction of the MIMO radar.

CN 106 443 610 A discloses a self-correcting method for mutual coupling errors of MIMO radar receiving and transmitting arrays, and mainly solves the problems that when mutual coupling errors of the receiving and transmitting arrays are corrected by the traditional method, a large number of samples are required, and transmitting mutual coupling errors cannot be corrected in real time in an online manner.

The publication "Pragmatic Approach to Phase Self-Calibration for Planar Array Millimeter-Wave MIMO Imaging" by X. Tian et al. in IEEE Transactions on Instrumentation and Measurement, vol. 70, pp. 1-11, 2021, Art no. 4501111, doi: 10.1109/TIM.2020.3031167 discloses a pragmatic self-calibration approach for millimeter-wave multiple-in multiple-out (MIMO) imaging.

It is the object of the invention to provide a solution by means of which a reliable automatic intrinsic calibration procedure for a radar device with multiple inputs and multiple outputs is provided. This object is solved by the subject matters of the independent claims.

One aspect of the invention relates to a method for intrinsic calibration of a radar device for a vehicle. The radar device is a multiple input multiple output (MIMO) radar array system comprising multiple transmitting antenna elements and multiple receiving antenna elements. Each antenna element comprises an antenna and an antenna channel. The radar device is preferably an automotive radar device mounted in a vehicle. The radar device is, for example, positioned in a front or a back section of the vehicle facing a surrounding area of the vehicle. The automotive radar device can, for example, be positioned in front or behind a bumper of the vehicle.

The inventive method is a result of the following observations: An alternative to end-of-line calibration of radar array systems often involves dynamic scenarios. The objects, meaning the targets, then change after each coherent processing interval, with the consequence that the unknown model parameters need to be determined with dynamic measurements. The processing interval may be, for example, 20 milliseconds long. The unknown model parameters describe phase imbalances and/or non-uniform signal-to-noise across channels, which can change in a time scale of minutes, and/or antenna position errors that result from a deformation of the antenna substrate of the respective antenna element. MIMO radar array systems present the opportunity of reducing the number of unknown model parameters to be identified or estimated by estimating at least the unknown phase imbalances of transmitting and receiving antenna channels. In dynamic scenarios, however, targets that can be used for calibration have unknown coordinates that also change with each coherent processing interval. This requires a calibration method that does not assume knowledge of number of targets and can provide an estimate with a single or few snapshots. A snapshot is a part of a frame, wherein a frame refers to a coherent process interval in which the radar device provides coherent radar data.

Subspace methods typically require more snapshots compared to the wanted calibration method. Besides, maximum Likelihood in state-of-the-art auto-calibration methods requires preliminary knowledge of the number of targets, which is difficult to obtain with only one single or few snapshots. It is hence of advantage to provide a calibration method which comprises separating the calibration parameters at least in a way to distinguish phase imbalances from other parameters such as noise variances, which may be estimated fitting the signal without knowing the number of targets. Moreover it should be considered that in the case of large arrays the known far-field model of planar wave fronts does not apply. Methods that are amenable to near-field models of spherical wave fronts are thus necessary, while most literature available for auto-calibration uses far-field models. In case of sparse arrays and curved geometries, known methods based on, for example, Fourier transformations may fail because they require linear geometries or even uniform arrays of radar elements.

Parameters to be estimated to provide reliable calibration are at least phase imbalance data. Phase imbalance data describe a phase imbalance between antenna channels due to different cable lengths, effects of active elements and/or temperature. These are $N_{Tx}+N_{Rx}-2$ unknowns, up to an initial phase for the first transmitting and receiving antenna channels. $N_{Tx}$ and $N_{Rx}$ defined the number of transmitting antenna channels (Tx) and receiving antenna channels (Rx), wherein x allows differentiation between antenna channels 1 to i, where i is a natural number describing a number of respective antenna channels of the radar device. The unknowns are completely arbitrary in the domain $\pm\pi$ radian (rad). Phase imbalance data can change in a scale of minutes. If a coherent processing interval (CPI) lasts, e.g., 20 milliseconds, this means 60 seconds times 50 CPI per second result in 3000 snapshots or frames per minute.

The inventive method comprises: providing radar data describing an object positioned in a coverage area of the radar device. The radar device provides the radar data. Providing radar data comprises receiving and processing reflected data by means of the receiving antenna elements, wherein the reflected data correspond to generated and emitted output data provided by means of the transmitting antenna elements, wherein the emitted output data has been reflected on the object positioned in the coverage area of the radar device. In other words, radar data are generated and emitted using transmitting antenna channels and corresponding antennas using a suitable multiplexing scheme, for example, time division multiplexing. The provided data include but are not limited to trains of fast linearly modulated chirps. The echoes from the scene, meaning the echoes from the object in the coverage area of the radar device, are received and processed at the receiving antenna channels. A coherent processing interval includes the coherent integration of echoes for all pairs of transmitted and received radar data.

The method further comprises processing the provided radar data to determine spectral phase data describing a spectral phase for all pairs of transmitting and receiving antenna elements of the radar device at a selected range-Doppler bin. The selected range-Doppler bin is determined by a constant false alarm rate (CFAR) detector. In other words, range-Doppler processing is performed producing a range-Doppler spectrum, in which spectral phases at a given range-Doppler bin can be selected for each pair of transmitting and receiving antenna channels according to some detection, for example by means of the CFAR detector. Alternatively, range processing is performed instead of range-Doppler processing resulting in spectral phases at a given range bin which can be selected for each pair of antenna channels. Spectral phases and amplitudes at a given range-Doppler bin for each pair of transmitting and receiving antenna channels may be collected in a vector. The vector may be referred to as (virtual) array signal or snapshot. Normalization of amplitudes can be performed across said vector, which may yield to a vector with non-uniform signal-to-noise across transmitting and receiving antenna element pairs.

Moreover, the method comprises applying an auto-calibration algorithm on the determined spectral phase data. This is done to estimate at least phase imbalance data. The phase imbalance data describe a phase imbalance regarding the transmitting and receiving antenna elements. The auto-calibration algorithm comprises a sparse reconstruction of angle values provided by the radar data and an application of a phase imbalance determination algorithm on the reconstructed angle values. The method then comprises calibrating the radar device under consideration of the estimated phase imbalance data.

Applying the auto-calibration algorithm is based on using a set of the last few virtual array signals or snapshots. The auto-calibration algorithm may be referred to as auto-calibration using sparse reconstruction. The auto-calibration algorithm may, for example, comprise a rank-one approximation.

In general, an algorithm in the sense of the invention comprises at least one regulation and/or information necessary to allow a control unit to perform the algorithm. By performing the algorithm, the control unit determines data that is supposed to be provided by applying the respective algorithm. The control unit can be a component of the radar device, a component of the vehicle and/or an external device such as a backend or a server.

The inventive method may comprise operating the radar device. Therefore it may comprise estimating a point cloud by performing array processing on further radar data provided by means of the calibrated radar device and evaluating the estimated point cloud to provide detection, distance estimation and/or movement tracking of the object.

In summary, the inventive method provides a reliable automatic intrinsic calibration procedure for a radar device with multiple inputs and multiple outputs.

The advantages of the inventive method as well as the embodiments described below are that it is suitable for auto-calibration of MIMO arrays and a number of parameters is reduced thanks to factoring contributions of transmitting and receiving antenna channels to phase imbalances (or - as described below - to noise variances). The method works with only one or few snapshots, does not assume knowledge of number of targets and can be performed with static but non-controlled conditions for estimation of antenna position errors. Further, an estimation of non-uniform noise variance or unknown signal-to-noise-ratios is possible. The method is suitable for large, sparse and curved arrays and valid for near-field models. Unknown antenna position errors can be determined inside the loop using criteria that are often satisfied in stationary conditions such as gas or charging stations (see respective description below). Besides, online calibration of large arrays becomes accessible in automotive application so that an end-of-line calibration is no longer needed.

The auto-calibration algorithm is based on well-known models. The reference frame has its x-axis along a boresight direction of the radar and its z-axis is vertical. The azimuth angles are measured with respect to the x-axis and the elevation angles with respect to the x-y plane.

One model considered is the geometric near-field model for spherical wave fronts. For receivers (meaning receiving antenna elements) located at $\{pi = [x_i, y_i, z_i]\}$, target at angles $\phi$, $\theta$ and distance r, the receive steering vector is:

$$[a_{Rx}(\phi, \theta, r)]_i = \exp\left(-j\frac{2\pi}{\lambda} r \sqrt{1 - \frac{2}{r}n^T p_i + \frac{p_i^T p_i}{r^2}}\right)$$

where n := [cos($\theta$) cos($\phi$), cos ($\theta$) sin ($\phi$), sin ($\theta$)] is the target direction. By reciprocity of transmission and reception, the transmission steering vector $a_{Tx}(\phi,\theta,r)$ is analogous in terms of the transmitter locations, meaning the locations of the respective transmitting antenna element. The array signal model for the Tx-Rx virtual pairs (pairs of transmitting and receiving antenna elements) is $a(\phi,\theta,r) := a_{Tx}(\phi,\theta,r) \otimes a_{Rx}(\phi,\theta,r)$ with Kronecker product $\otimes$.

In the far-field model for planar wave fronts, the steering vector for either transmission or reception simplifies to:

$$[a_{Rx}(\phi, \theta)]_i = \exp\left(j\frac{2\pi}{\lambda} n^T p_i\right).$$

In the monostatic case, the combined steering vector of transmission and reception is: $a(\phi,\theta) := a_{Tx}(\phi,\theta) \otimes a_{Rx}(\phi,\theta) = \exp(j\cdot(2\pi/\lambda)\cdot n^T p_{virt})$ with $p_{virt} = p_{Tx} \oplus p_{Rx}$ with Kronecker sum $\oplus$).

Inputs into the auto-calibration algorithm is the far-field model and/or the near-field model at a given range bin, meaning at the selected range-Doppler bin $a(\phi) \equiv a(\phi,R;p_{Tx},p_{Rx})$. Furthermore, nominal front-end Tx- and Rx-positions, meaning positions of the receiving and transmitting antenna elements are known as inputs into the auto-calibration algorithm:

$$p_{Tx} \in R^{N(Tx)\times3}$$

and

$$p_{Rx} \in R^{N(Rx)\times3}.$$

The spectral phases at the selected range-Doppler bin is detected for each pair of Tx-Rx-antenna channels, with amplitudes normalized or equalized, wherein each snapshot is a column in the matrix $X \in C^{N(Tx)N(Rx)\times L}$. The time window corresponds to the scale of change of intrinsic parameters but the angles of targets can change with each frame.

Initialization of noise variances for Tx- and Rx-antenna channels with some nominal value, for example, a uniform or other initialization:

$$Q_{it=0} := \sigma_2 I_{N_{Tx}N_{Rx}}$$

Initialization of phase imbalances, with nominal, random or zero phases $\Psi_{Tx} \in [-\pi, \pi]^{N(Tx)}$, $\Psi_{Rx} \in [-\pi, \pi]^{N(Rx)}$ and with:

$$G_{it=0} := \mathrm{diag}(\exp(j\psi_{Tx})) \otimes \mathrm{diag}(\exp(j\psi_{Rx}))$$

For it = 1,... with repetition until convergence or until a given number of iterations has been performed.

According at least to a second alternative, the auto-calibration algorithm comprises whitening of the determined spectral phase data. Whitening of signals is performed using the current noise covariance matrix $Q_{it}^{-1/2}$ formed with noise variances of Tx and Rx elements (this can be thought of as a form of amplitude tapering):

$$\tilde{X}_{it} := Q_{it}^{-\frac{1}{2}} X$$

And the modification of the model with the current phase imbalances and noise covariance matrix is:

$$\tilde{a}(\phi) := Q_{it}^{-\frac{1}{2}} G_{it}\, a(\phi)$$

Afterwards the above-mentioned sparse reconstruction of angles is performed. The sparse reconstruction uses as input data the snapshots $\tilde{X}_{it}$ and as dictionary or sensing matrix the evaluation of the near-field model $\tilde{a}(\cdot)$ in a grid of hypothesis of azimuth and elevation angles: $A := [\tilde{a}(\phi_1) \cdots \tilde{a}(\phi_N)]$.

In particular, but not restricted to this, Basis Pursuit De-noise (BPDN) solves the problem for each snapshot I as follows:

$$\min_Z \left\| \tilde{X}_{it}(:,l) - AZ(:,l) \right\|_2 + \lambda \| Z(:,l) \|_1$$

Where each snapshot $\tilde{X}_{it}(:,l)$ is fitted independently because the scene can change between snapshots. The solution matrix Z contains as columns the complex amplitudes for the sources in the grid. $\lambda$ is a hyper-parameter chosen accordingly to the signal-to-noise-ratio.

Alternatively, Orthogonal Matching Pursuit (OMP) performs a sequential search of targets taking the column of A with highest correlation in the matched-filter on the signal $A^H \tilde{X}_{it}(:,l)$ and subsequently on the current residual, meaning removing the best fit of the targets found, until a stopping criterion is satisfied. At the output, the reconstruction of the signal is $(AZ)_{it}$.

According to a first alternative, the phase imbalance determination algorithm comprises fitting estimated phase imbalance data for each pair of transmitting and receiving antenna elements as a pre-multiplying diagonal matrix under consideration of the sparse reconstruction and particularly the whitened spectral phase data. Moreover, the phase imbalance determination algorithm comprises factorizing the estimated phase imbalance data into contributions of a respective transmitting or receiving antenna of the multiple respective antennas by applying a rank-one approximation.

In other words, the phase imbalance data are estimated in two steps. First, for each virtual Tx-Rx-pair, they are fitted as a pre-multiplying diagonal matrix G = diag($g_1,...g_{N(Tx)N(Rx)}$) using least squares:

$$\min_{G} \left\| \tilde{X}_{it} - G \, Q_{it}^{-1/2} \, (AZ)_{it} \right\|_{F}$$

with the Frobenius norm $\| ... \|_{F}$ and the standard least squares solution,

$$g_m = \left( \tilde{X}_{it} \right)_m H_m^H (H_m H_m^H)^{-1}$$

where $H_m$ is the m-th column of H:= $Q_{it}^{-1/2}(AZ)_{it}$ for m = 1,... $N_{Tx}N_{Rx}$.

In the next step, the phase imbalances are factorized into Tx and Rx contributions via the rank-one approximation, meaning using singular value decomposition as follows:

$$G_{Rx,Tx} := \text{reshape}(g, [N_{Rx}, N_{Tx}])$$

$$G_{Rx,Tx} = U\Sigma V^H = \sum_{i}^{N_{Tx}N_{Rx}} \sigma_i \, u_i v_i^H$$

$$G_{Rx,Tx,\,\text{rank1}} := \sigma_1 u_1 v_1^H$$

$$g_{\text{rank1}} := \text{vec}(G_{Rx,Tx,\,\text{rank1}})$$

$$G_{it+1} := \text{diag}(g_{\text{rank1}})$$

Note also that this step is sensitive to the estimation of scatterers in the sparse reconstruction. In particular, another scatterer contributes an extra rank-one matrix in case of stopped vehicle detection (SVD).

It is hence possible to provide phase imbalance data which are particularly accurate and reliable based on the above-described calculations.

The second alternative comprises that the phase imbalance determination algorithm comprises fitting the whitened spectral phase data using a model that takes into account the product form of phase imbalances of the transmitting and receiving antenna elements in virtual antenna channels, wherein using the model results in particular in non-linear equations which are solvable by applying a Newton method or fixed-point iterations. This represents an alternative way to determinate the phase imbalance data which is not based on fitting estimated phase imbalance data for each pair of transmitting and receiving antenna elements as a pre-multiplying diagonal matrix and applying a rank-one approximation. In other words, this embodiment comprises a procedure that considers a explicit non-linear constraint on the rank-one, meaning an explicit constraint on the factorization between Tx and Rx contributions instead of an approximation.

The procedure comprises defining the phase imbalances of Tx and Rx channels as:

$$g_{Tx} = e^{i\Psi_{Tx}} \in C^{N(Tx)} ;$$

and

$$g_{Rx} = e^{i\Psi_{Rx}} \in C^{N(Rx)}.$$

Then the whitened measurements are fitted: $X \equiv \tilde{X}_{it} = Q_{it}^{-\frac{1}{2}}[x_1,\ldots,x_L] \in C^{N_{Tx}N_{Rx}\times L}$ using a model that takes explicitly into account the product form of Tx and Rx phase imbalances in the virtual channels:

$$\min_{g_{Tx}, g_{Rx}} \left\| X - \left( \mathrm{diag}(g_{Tx}) \otimes \mathrm{diag}(g_{Rx}) \right) \cdot Y \right\|_F^2$$

where $\| \ldots \|_F$ is the Frobenius norm. The sparse reconstruction of the scene $Y := AZ$ is assumed as known. This is for example in the context above the case there sparse reconstruction has been previously applied. An implicit analytic solution for critical points of this optimization problem can be found using well-known algebraic properties of Frobenius norm, Kronecker product and Wirtinger derivatives.

The resulting normal equations are the following non-linear equations,

$$g_{Rx} = (C \, g_{Tx}^*) \oslash (S \, (g_{Tx} \odot g_{Tx}^*))$$

$$g_{Tx} = (C^T \, g_{Rx}^*) \oslash (S^T (g_{Rx} \odot g_{Rx}^*))$$

where entry-wise multiplications and divisions are represented by $\odot$ and $\oslash$. The matrices S and C are defined in terms of the matrizations $\check{Y}_{lij} := \mathrm{reshape}(Y(:,l), [N_{Rx}, N_{Tx}])$ and $X_{;;;} := reshape(X(:, l), [N_{Rx}, N_{Tx}])$ as follows:

$$S_{ij} = \sum_{l=1}^{L} | \check{Y}_{lij} |^2$$

$$C_{ij} = \sum_{l=1}^{L} \check{Y}_{lij}^* \check{X}_{lij}$$

where the notation * refers to the complex conjugate.

Methods to find solutions to the above non-linear equations include Newton method or fixed-point iterations alternating between the expressions for $g_{Tx}$ and $g_{Rx}$ starting with initial estimates. The solution however may not be unique and the critical points need to be verified as minima.

Alternatively, the phase imbalance data may be determined by counting the targets using SVD and/or checking for an exact reconstruction of two targets with phase imbalances that result in rank-one or rank-two approximations.

According to a further embodiment applying the auto-calibration algorithm comprises determining noise variance data describing a noise variance of each transmitting and receiving antenna element. Calibrating the radar device is then performed under consideration of the determined noise variance data.

Signal-to-noise radios (SNR) of each channel result in $N_{Tx} + N_{Rx}$ unknowns. It is not necessary to consider a model of statistical correlations of the noise realizations but only the average power of signal with respect to average power of noise, meaning SNR. The input signal is normalized in amplitude, so only the SNR is estimated. The split of SNR between Tx and Rx antenna channels is performed up to an arbitrary factor between them. This factor is not necessary for the processing. The SNR of the channels can change in a scale of minutes, similarly as the phase imbalances.

Besides, an embodiment comprises that the determination of the noise variance data comprises applying a rank-one approximation and is in particular performed under consideration of the sparse reconstruction.

In more detail, the noise variance data associated to each virtual Tx-Rx channel is obtained averaging the residual formed by subtracting the array measurement minus the reconstructed signal:

$$q = [q_1, \ldots, q_{N_v}] = \frac{1}{L} \, \mathrm{diag}\big(p_1^H p_1, \ldots, p_{N_v}^H p_{N_v}\big),$$

where L is the number of snapshots, $N_v = N_{Tx} N_{Rx}$ and

$$[r_1, \ldots, r_L] = Res := \mathrm{stack}[X - (AZ)_{it}] \in C^{N_v \times L}$$

$$[p_1, \ldots, p_{N_v}] = [r_1, \ldots, r_L]^H$$

The Tx and Rx antenna channel noise variance data are obtained using a rank-one approximation. This is done, for example, by using singular value decomposition as follows:

$$Q_{Rx,Tx} := \text{reshape}(q, [N_{Rx}, N_{Tx}])$$

$$Q_{Rx,Tx} = U\Sigma V^H$$

$$Q_{Rx,Tx,\text{rank1}} := u_1 \sigma_1 v_1^H$$

$$q_{\text{rank1}} := \text{vec}(Q_{Rx,Tx,\text{rank1}})$$

$$Q_{it+1} := \text{diag}(q_{\text{rank1}})$$

In case the phase imbalances of Tx and Rx antenna channels were estimated using the explicit constraint instead of the rank-one approximation, the obtained values for $g_{Tx}$ and $g_{Rx}$ are further considered to determine the noise variance as follows: $g_{\text{rank1}} := g_{Tx} \otimes g_{Rx}$ and $G_{it+1} = \text{diag}(g_{\text{rank-one}})$. The above-mentioned calculations to determine the noise variance data are performed afterwards.

Besides, an embodiment comprises that applying the auto-calibration algorithm comprises determining antenna position data describing a position of each antenna comprised by the radar device. This embodiment is the result of the observation that the calibration method should solve the problem of determining antenna positions within the radar device. This determination may require a static (but still uncontrolled) scenario that allows the determination of the number of targets. In large arrays such as MIMO systems, the estimation of antenna position errors is required: Manufacturing tolerances exceed necessary precision of antenna placement for coherent antenna array operation. Structural changes or deformations due to thermal variations or mechanical torsions of the vehicle's body can introduce further antenna position errors, which require online calibration. Besides, the estimation of antenna position mismatches of the order of a wavelength presents a challenge because existing procedures for self-calibration can only estimate position errors of up to a small fraction of a wavelength, whereas manufacturing tolerances can exceed half a millimeter, which is an error above a wavelength at 77 gigahertz. Therefore, improving the methods for estimation of antenna positions presents several opportunities: Of advantage are methods taking place in static yet non-controlled scenarios like gas stations or idle times in cross roads or traffic lights, which are quite common, where the amplitudes of some targets can be sufficiently constant over some frames to determine the number of objects (targets) with confidence and applying maximum likelihood. However, methods for dynamic scenarios are also possible but more challenging and possibly unnecessary for the estimation of antenna positions.

The antenna positions, alternatively referred to as front-end phase centers, are $N_{Tx} + N_{Rx} - 1$ unknowns in as many spatial dimensions as required by the parametrization of the array. It is desirable to parametrize the surface or curve with as few degrees of freedom as possible. The nominal positions are the intended positions in series manufacturing but the tolerances in the order of up to 5 millimeter are larger than the necessary precision in the order of 1/10th of wavelength, which for carrier frequencies of approximately 77 gigahertz is approximately 0.4 millimeter. These parameters are assumed to change only in a longer time scale of several minutes to hours due to temperature and/or long-term deformations or changes in the structure of the radar device. Estimating and/or compensating the effect of fast vibrations is not specifically included.

According to an embodiment, the determination of the antenna position data is performed under consideration of the sparse reconstruction. In more detail, the output of the sparse reconstruction is considered, meaning the complex amplitudes of the sources, for each snapshot Z(:,l). In particular, such conditions include that the support of the source amplitudes Z(:,l) at snapshot l is constant at least for some range-Doppler bin over some number of snapshots The threshold can be chosen using the noise power estimate from the CFAR detector in adjacent range-Doppler bins. This condition in particular allows to count the number of sources.

Furthermore, an estimation of antenna positions is performed when the above-mentioned condition is met. Using said snapshots, the likelihood can be maximized with global optimization over Tx and Rx positions (phase centers). This may include a search of the angles in a small neighborhood of the initial estimates:

$$\min_{p_{Tx}, p_{Rx}} \mathcal{L}(p_{Tx}, p_{Rx})$$

where said likelihood function is defined using an entry-wise logarithm [28], as described by M. Pesavento und A. Gershman in "Maximum-likelihood direction-of-arrival estimation in the presence of unknown nonuniform noise" (IEEE Transactions on Signal Processing, Bd. 49, Nr. 7, pp. 1310-1324, 2001):

$$\mathcal{L}(p_{Tx}, p_{Rx}) = \text{trace } Log\left(P_{\tilde{A}}^{\perp} \hat{\hat{R}}_{it}\right)$$

Where $P_{\tilde{A}}^{\perp} := I - \tilde{A}\left(\tilde{A}^H \tilde{A}\right)^{-1} \tilde{A}^H$, with the model evaluated at K unknown target angles, with

$\tilde{A} = Q_{it}^{-\frac{1}{2}} G_{it}[a(\phi_1; p_{Tx}, p_{Rx}) \cdots a(\phi_K; p_{Tx}, p_{Rx})] \in C^{N_{Tx}N_{Rx} \times K}$ and $\hat{\hat{R}}_{it} := \frac{1}{N} \tilde{X}_{it} \tilde{X}_{it}^{H}$.

According to another embodiment, applying the auto-calibration algorithm comprises verifying weather noise power estimate data describing a noise power estimated for adjacent range-Doppler bins provided by a constant false alarm rate detector are within a noise power value range or not. The antenna position data are only determined when the noise power estimate data are within the noise power value range.

Moreover, an embodiment comprises that the antenna position data are determined while the radar device and the object are unmoved for at least a time interval that is smaller than a threshold time interval. This means that, for example, the vehicle with the radar device stands still while the calibration of the radar device is performed. The target (object) stands as well still. Preferably, the static targets is located at a gas or charging station, where the vehicle is stopped for at least a few minutes during refueling or recharging. Alternatively or additionally, the target is located in the surroundings of the vehicle during a stopping time in a cross road or at a traffic light.

The condition mentioned in the context of determining the antenna position data can be satisfied in static scenarios like gas or charging stations or other stationary. Therefore, it is not necessary to estimate antenna positions in the most challenging dynamic scenarios. Particular cases include the identification of a range-Doppler bin that contains a single peak in the absolute values of the reconstruction coefficients Z(:,l).

In addition, the output of inertial measurement units or global positioning systems can be used to confirm a static scenario like gas station or waiting in traffic lights, possibly in conjunction with Doppler measurements.

An unmoved radar device and target (object) result in increased accuracy of calibration while facilitating the necessary calculations because no relative movements between radar device and target have to be considered.

Moreover, an embodiment comprises performing an angular bias determination algorithm to determine angular bias data describing an angular bias of the provided radar data. The angular bias results from ambiguity between phase imbalances and rotation in angle data provided by the radar data. The angular bias determination algorithm is performed on the determined spectral phase data. The radar data provided by the radar device are corrected under consideration of the determined angular bias data to determine corrected angle data for the object.

The angular bias is determined for the purpose of intrinsic auto-calibration. The estimation may have an inherent ambiguity or non-uniqueness of solution up to a rotation of the angles, which is equivalent to a linear phase trend added to the phase imbalances. The angular bias data are relevant for the performance of the radar and for sensor fusion and are estimated with extrinsic calibration or with the method described in detail below:

The following procedure allows estimating the angular bias resulting from the ambiguity between phase imbalances and rotation in the angle. Thus, the following procedure describes the angular bias determination algorithm. The intuition is that the beat-frequency changes for each Tx-Rx antenna element pair there is range migration or range walk. The pattern of migration gives information of the angle with low resolution. This explains that the nominal positions of the antennas are sufficient even with large errors and the phase information is not used. It is highly robust to noise. The resolution improves with the bandwidth because the range migration increases and can be slightly better for close targets.

Crucially, the angular bias resulting from ambiguity during the intrinsic calibration may change with the training set of snapshots, and with the underlying ground truth of phase imbalances, which can change in a scale of minutes (or thousands of frames). Otherwise, this bias is constant over the appropriate units of electronic angle. This variant (or alternative extrinsic calibration) is performed in a scale of minutes in concurrence with the intrinsic calibration method to determine the phase imbalance data. Any other method for extrinsic calibration to align reference frames can be applied to improve the estimation of the bias.

The angular bias determination algorithm is based on following assumptions: a single target in range-Doppler bin; static conditions (which can be relaxed if range migration across slow time is small); one frame is sufficient; a large array compared to the range resolution is considered; and the array does not need to be intrinsically calibrated. Phase imbalances can be completely unknown and nominal antenna positions can have large errors, for example larger ones than a wavelength.

The angular bias determination algorithm considers as input data: data cube, meaning an ADC signal for each Tx-Rx pair. The algorithm comprises the following:

Firstly, range and Doppler processing of fast and slow time signals for each Tx-Rx pair or range processing is performed. Approximate estimates of range and Doppler are sufficient. Therefore it is sufficient to use simple fast Fourier transforms. Secondly, a selection of range-Doppler is performed, for example, after applying the CFAR detector. The selected range is

denoted as $r_0$. One of the following conditions needs to be satisfied to guarantee that the range bin has a target in a single angular bin and no more: If the array is intrinsically calibrated earlier, angular processing produces a biased angle but it can be confirmed that it corresponds to a single target/single angular bin. Alternatively or additionally some external guarantee is required with another sensor that said bin contains a target in a single angular bin.

Thirdly, if Doppler variable is estimated, a coherent Doppler focusing with the following steps is performed: For given estimate of Doppler, calculate Doppler shift for all the fast-time samples in each. Then multiply entry-wise over the slow-time dimension the input signal and the Doppler shifts and sum over slow time dimension. The output of Doppler focusing has the dimensions of Tx-Rx pairs and fast time samples, meaning of $N_{Tx}N_{Rx}N_{\text{fast time}}$. Fourthly, range tuning of signal is performed. This comprises an entry-wise multiplication over fast time for each Tx-Rx pair with a tone (complex or real) with the beat-frequency corresponding to said tuning range. The sum over fast-time samples is not performed, therefore this step is not called range focusing). This is followed by converting the result in matrix form, which has dimensions $N_{Tx}N_{Rx}$ x $N_{\text{fast time}}$. Then denote this matrix signal by $W_r \in C^{N(Tx)N(Rx)xN(\text{fast time})}$ for tuning range r.

Fifthly, a signal model for the initial estimate of range $r_0$ and for zero Doppler for a grid of angular hypotheses is evaluated. Hereby, an assumption of a static scenario is used. This can be done independently of the above-mentioned estimations of the phase imbalance data. The evaluation of the signal model comprises: the output is a cube of fast-time synthetic signals for each pair of Tx and Rx antenna channels and for each hypothesis of angle. In tensor form, it has dimensions of:

$$N_{Tx}N_{Rx} \times N_{\text{fast time}} \times N_{\text{angles}}.$$

Besides, denote this cube or tensor by $B \in C^{N_{Tx}N_{Rx} \times N_{\text{fast time}} \times N_{\text{angles}}}$.

Sixthly, the previous model evaluation B is correlated with the range-tuned signal $W_r$ in the fast-time dimension. For each hypothesis of angle, and for each Tx and Rx it is correlated over fast-time under consideration of:

$$B\left(:, i_{Tx,Rx}, \ i_{\text{angle}}\right)^{H} W_r\left(:, i_{Tx,Rx}\right) =: W_{r\,\text{focused}} \in C^{N_{Tx}N_{Rx} \times N_{\text{angles}}}.$$

The fast time dimension is compressed or focused in range r and the resulting dimension is antennas and angles.

Seventhly, absolute values over Tx-Rx pairs (for each hypothesis of angle) are sum up:

$$\overline{W}_r\left(i_{\text{angle}}\right) := \sum_{i_{Tx,Rx}} \left| W_{r\,\text{focused}}\left(i_{Tx,Rx}, i_{\text{angle}}\right) \right|$$

In this context, absolute values over antenna pairs are sum up incoherently because it is assumed that the array is not calibrated and the phase imbalances are arbitrary. Besides, the antenna dimension is compressed and the resulting dimension is angles:

$$\overline{W}_r \in R^{N_{\text{angles}}}.$$

Eighthly, the maximum over angles and over tuning ranges is estimated. Therefore, the following steps are iterated a few times: Store the maximum for each tuning range: $m_r = \max\limits_{i_{\text{angle}}} \overline{W}_r\left(i_{\text{angle}}\right)$

Search the maximum of $m_r$ over tuning ranges in the neighborhood of the initial range estimate $r_0$, $m^* = \max(m_r)$ over r. Convergence is fast because if an angular value is maximum for a range tuning value, it should also be near maximum for another close range (given that a single target is assumed).

Ninthly, the resulting value of angle is non-biased and can be used to correct the systematic error of the main method for intrinsic calibration. For a horizontal linear array with azimuth measuring capability, the bias is constant over electronic angle:

$$\text{bias} = \sin(\phi_{\text{without bias}}) - \sin(\phi_{\text{with bias}}).$$

The correction in azimuth becomes $\phi_{\text{corrected}} = \text{asin}(\text{bias} + sin(\phi_{\text{biased estimate}}))$.

For a planar array with azimuth and elevation angles measuring capability: $\{p_n = (0, y_n, z_n)^T\}$. The following electronic angles have a constant bias $u_{0y}$, $u_{0z}$ in the spatial frequencies that can be measured as follows:

$$u_t = \left({}^{2}\!\sqrt{1 - u_{ty}^2 - u_{tz}^2}\,,\ u_{ty}, u_{tz}\right) u_t' = \left({}^{2}\!\sqrt{1 - \left(u_{ty} + u_{0y}\right)^2 - (u_{tz} + u_{0z})^2}\,,\ u_{ty} + u_{0y},\ u_{tz} + u_{0z}\right).$$

The azimuth and elevation angles have to be corrected according to the mapping: $u_{ty} = \sin(\phi)\mathrm{con}(\theta)$ and $u_{tz} = \cos(\phi)\mathrm{con}(\theta)$. For curved arrays the biases have to be characterized depending on the array.

According to a further embodiment, the angular bias determination algorithm is performed before, during and/or after applying the auto-calibration algorithm. In other words, the angular bias determination algorithm can be applied before, during or after the method for intrinsic calibration to determine the angle of single targets without systematic error and therefore allowing correcting the bias.

For use cases or situations which may arise by performing the method and which are not explicitly described here, it may be provided that, in accordance with the method, an error message and/or a prompt for user feedback is output and/or a default setting and/or a predetermined initial state is set.

In general, the algorithm can be iterative. The estimation of the three types of parameters, meaning the phase imbalance data, the noise variance data and the antenna position data, can be performed inside a loop in no particular order or in parallel.

After the sparse reconstruction, a constant offset in the angles which is constant in electronic angle in the reconstruction is typically expected due to an inherent ambiguity between phase imbalances and electronic angle, for example, in linear and planar arrays. This bias is corrected with an independent algorithm or optionally by applying the angular bias determination algorithm or with another method for extrinsic calibration.

A further aspect of the invention relates to a control unit for a radar device constructed to perform the above-described method. The control unit may be referred to as processing unit. The control unit may comprise one or more microprocessors and/or one or more microcontrollers and/or one or more ASIC (application specific integrated circuit). Further, the control unit may comprise program code that is designed to perform the method when executed by the control unit. The program code may be stored in a data storage of the control unit. The control unit performs the steps of the inventive method.

Another aspect of the invention relates to a vehicle with a radar device and a control unit as described above. The vehicle is preferably a motor vehicle, such as a passenger car, a truck, a bus or a motor bike.

Furthermore, an aspect of the invention relates to a computer program product. The computer program is a computer program. The computer program product comprises instructions which, when the program is executed by a computer, such as the control unit, cause the computer or the control unit to carry out the inventive method. The computer program product may be or may comprise the program code mentioned above.

The invention also includes further embodiments of the control unit and/or vehicle and/or the computer program product according to the invention which have features as already described in connection with the embodiments of the inventive method. For this reason, the corresponding further embodiments of the control unit and/or the vehicle and/or the computer program product are not described again here.

The invention also includes combinations of the features of the embodiments described.

Examples of embodiments of the invention are described below. For this purpose, shows:

Fig. 1    a schematic representation of a vehicle with a radar device;

Fig. 2    a schematic drawing of a method to calibrate a radar device;

Fig. 3    a schematic drawing of an auto-calibration algorithm.

The examples of embodiments explained below are preferred examples of embodiments of the invention. In the examples of embodiments, the components described each represent individual features of the invention which are to be considered independently of one another and which each also further the invention independently of one another and are thus also to be regarded as a component of the invention individually or in a combination other than that shown. Furthermore, the described embodiments can also be supplemented by further of the already described features of the invention.

In the figures, functionally identical elements are each provided with the same reference signs.

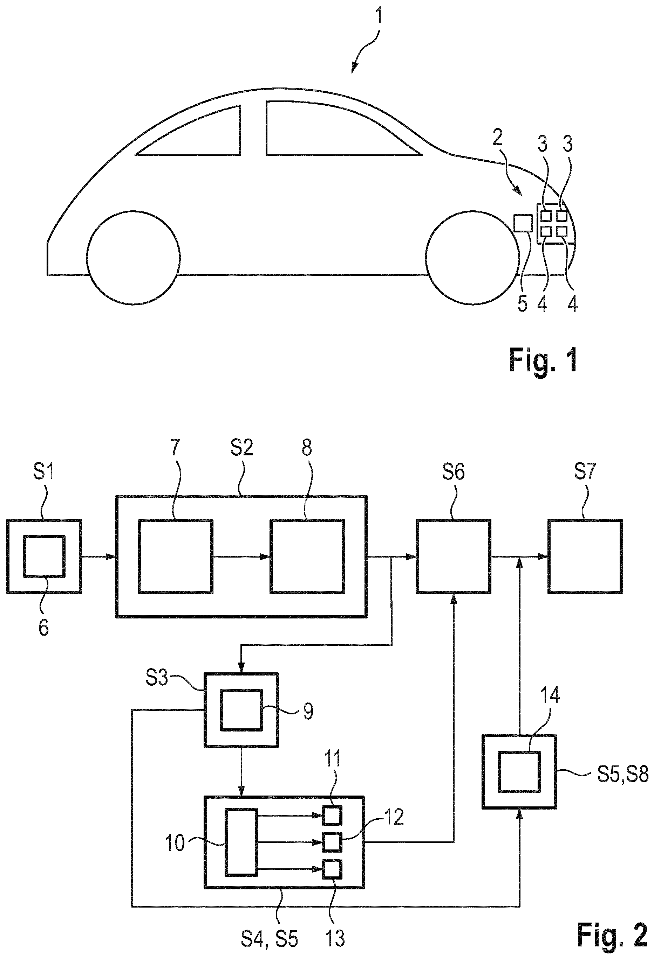

Fig. 1 shows a schematic representation of a vehicle 1. The vehicle 1 comprises a radar device 2. The radar device 2 can be positioned in a front, side and/or rear area of the vehicle 1. The radar device 2 is a multiple input multiple output (MIMO) radar array system comprising multiple transmitting antenna elements 3 and multiple receiving antenna elements 4. Each antenna element 3, 4 comprises an antenna and an antenna channel. The respective antenna is a front-end part of the respective antenna element 3, 4 constructed to transmit or receive electromagnetic waves in the radio or microwave domain. The antenna channel comprises all further components of the respective antenna element 3, 4 which are in particular electronic components such as an analog-to-digital converter (ADC) and/or a mixer.

The vehicle 1 further comprises a control unit 6. The control unit 6 can be a component of the radar device 2. The control unit 6 can be a central control unit 6 of the vehicle. In this case, the control unit 6 is an external unit compared to the radar device 2. The control unit 6 is, for example, a computer.

Fig. 2 shows a method for intrinsic calibration of the radar device 2. During the method, the radar device 2 is preferably mounted in the vehicle 1. In a first step S1, radar data 6 is provided. The radar data 6 describe an object positioned in a coverage area of the radar device 2. The radar data 6 is provided by means of the radar device 2. Afterwards steps S2 and S3 are performed to determine spectral phase data 9. Therefore, range-Doppler processing 7 is performed and a selected range-Doppler bin is determined by means of a constant false alarm rate detector 8. The spectral phase data 9 describe a spectral phase for all pairs of transmitting and receiving antenna elements 3, 4 of the radar device 2 at the selected range-Doppler bin. To be precise, step S2 may comprise processing the provided radar data 6 of each coherent processing interval and step 3 may comprise selection of the range-Doppler bin.

A step S4 comprises applying an auto-calibration algorithm 10 on the determined spectral phase data 9 to estimate at least phase imbalance data 11. The phase imbalance data 11 describe a phase imbalance regarding the transmitting and receiving antenna elements 3, 4. Applying the auto-calibration algorithm 10 can comprise determining noise variance data 12 describing a noise variance of each transmitting and receiving antenna element 3, 4. Moreover, applying the auto-calibration algorithm 10 may comprise determining antenna position data 13 describing a position of each antenna comprised by the radar device 2.

In a step S5, the radar device 2 is calibrated under consideration of the estimated phase imbalance data 11. Furthermore, the determining noise variance data 12 and/or the determining antenna position data 13 are considered by calibrating the radar device 2.

A step S6 may comprise estimating a point cloud by performing array processing on further radar data 6 provided by means of the calibrated radar device 2. A step S7 may comprise evaluating the estimated point cloud to provide detection, distance estimation and/or movement tracking of the object in the surroundings of the radar device 2.

For example after step S3, it is possible to perform an angular bias determination algorithm 14 in a step S8. This is done to determine angular bias data describing an angular bias of the provided radar data 6. The angular bias results from ambiguity between phase imbalances and rotation in angle data provided by the radar data 6. The angular bias determination algorithm 14 is performed on the determined spectral phase data 9. Radar data 6 provided by the radar device 2 are corrected under consideration of the determined angular bias data to determine corrected angle data for the object. The angular bias determination algorithm 14 is performed before, during and/or after applying the auto-calibration algorithm 10.

In other words, Fig. 2 shows a flow chart of the inventive system digital signal processing. The first part is the range-Doppler processing and CFAR, which outputs spectral phases for all Tx-Rx pairs at a selected range-Doppler detection in a set of the last frames. The time window or time horizon of the last frames is chosen such that the ground truth of phase imbalances, and antenna positions are assumed constant. The angles can change between frames. The snapshots or spectral phases at selected range-Doppler bins are used in the two main auto-calibration modules: The main module is for intrinsic calibration of array parameters such as transmitting and receiving antenna channel phase imbalance data 11, signal-to-noise-ratios (meaning noise variance data 12) and phase center positions and antenna position data 13. The first module hence represents the auto-calibration algorithm 10. The second module estimates the angular bias correction resulting from inherent ambiguity in the intrinsic calibration module. The second module represents thus the angular bias determination algorithm 14. The intrinsic calibration parameters are required for normal angular processing. The array processing block, meaning step S6, represents any algorithm for angular estimation. Any such algorithm requires an accurate model to match digitally measurements with hypotheses and produce a digital beamforming output where the side lobes are low and the main lobes correspond to the target (or object). On the other hand, the constant bias in electronic angle is an extrinsic parameter necessary for correct radar operation and sensor fusion.

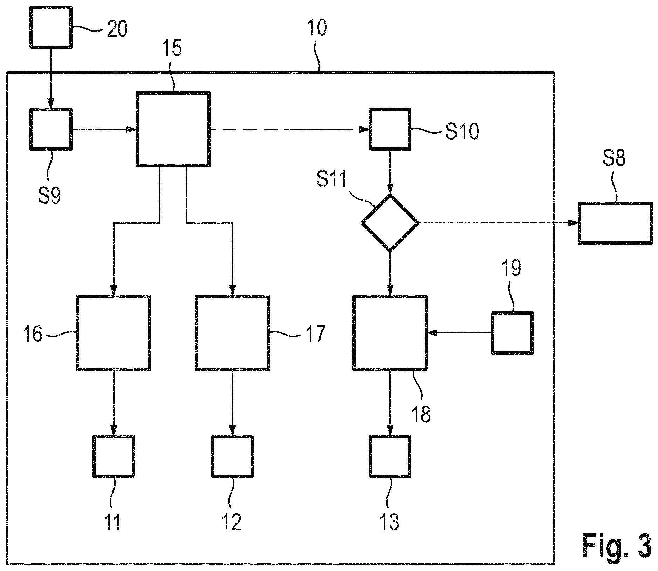

Fig. 3 shows the auto-calibrating algorithm 10 in more detail. A step S9 comprises whitening of the determined spectral phase data 9. Afterwards a sparse reconstruction 15 of angle values provided by the radar data 6 is performed and a phase imbalance determination algorithm 16 is applied on the reconstructed angle values. The phase imbalance determination algorithm 16 comprises fitting estimated phase imbalance data 11 for each pair of transmitting and receiving antenna elements 3, 4 as a pre-multiplying diagonal matrix under consideration of the sparse reconstruction 15 and particularly the whitened spectral phase data. The phase imbalance determination algorithm 16 comprises furthermore factorizing the estimated phase imbalance data 9 into contributions of a respective transmitting or receiving antenna of the multiple respective antennas by applying a rank-one approximation. Alternatively, the phase imbalance determination algorithm 16 comprises fitting the whitened spectral phase data using a model that takes into account the product form of phase imbalances of the transmitting and receiving antenna elements 3, 4 in virtual antenna channels. Using the model results in particular in non-linear equations which are solvable by applying a Newton method or fixed-point iterations.

The determination of the noise variance data 12 comprises applying a rank-one approximation and is in particular performed under consideration of the sparse reconstruction 15. For the determination a noise variance determination algorithm 17 can be applied.

A step S10 comprises verifying weather noise power estimate data describing a noise power estimated for adjacent range-Doppler bins provided by the constant false alarm rate detector 8 are within a noise power value range or not. The antenna position data 13 are only determined when the noise power estimate data are within the noise power value range. The determination of the antenna position data 13 is performed under consideration of the sparse reconstruction 15 as well. For the determination an antenna position determination algorithm 18 can be applied.

Before the antenna position determination algorithm 18 is applied, it can be verified in a step S11 weather the radar device 2 and the object (or target) are unmoved or not. The antenna position data 13 are determined while the radar device 2 and the object are unmoved for at least a time interval that is smaller than a threshold time interval. Meaning the antenna position data 13 are only determined if the verification in step S11 is positive. Determining the antenna position data 13 may consider parametrization 19 of uncertainty region of antennas.

Input data 20 to the auto-calibration algorithm 10 may comprise snapshots at selected range-Doppler bins, particularly normalized.

The steps of the method are performed by the radar device 2. The determination and evaluation steps are performed by the control unit 5.

In summary, the inventive method provides self-calibration of MIMO arrays and the following feature: It is a self-calibration method for MIMO large arrays where transmitting and receiving antenna channels have arbitrary phase imbalances and antenna positions have unknown large errors. It is not necessary to determine a grid of angular positions of a target, which increases the calibration effort in a factory setup. The method can operate with unknown antenna position errors, which is an important feature for large arrays mounted on vehicles. There is explicit non-linear constraint on phase imbalances due to transmitting and receiving antenna channels to reduce number of parameters. In prior art, all methods that allow to estimate all unknown calibration parameters are not directly applicable to MIMO systems without this important feature, in which the constraint is non-linear. The method comprises estimation of non-uniform noise variances across antenna elements 3, 4 and also factorizes between transmitting and receiving antenna channels, which is an additional feature that allows to operate with large arrays where the signal-to-noise-ratio can be different between channels. The method can also comprise correction of angular bias resulting from the ambiguity in intrinsic calibration which can be corrected with a single frame and/or static scenarios thanks to the optional variant that leverages the range migration across antennas possible in a large array to produce angular estimates even without phase information and without a priori knowledge of the antenna position errors.

The possible inputs to perform the method are:

a. The spectral phases at a given range-Doppler bin detection for each pair of Tx-Rx antenna channels with amplitudes normalized or equalized for each snapshot. (The time window correspond to the scale of change of intrinsic parameters, but the angles of targets in that range-Doppler bin can change with each frame.)

b. Near-field model at given range bin or the far-field model.

An initialization of noise variances for transmitting and receiving antenna channels, phase imbalances and nominal front-end phase centers of the transmitting and receiving antennas is performed. Further, repetition until convergence or until a given number of iterations of the following steps takes place:

1. Whitening of signals with diagonal covariance matrix formed with noise variances of transmitting and receiving antenna elements 3, 4 takes place in step S1.

2. Sparse reconstruction 15 of angles takes place, using as data the snapshots and as dictionary the sensing matrix and the evaluation of the near-field model in a grid of hypothesis of azimuth and elevation angles. The output is the reconstruction of the signal as a linear combination with complex amplitudes of atoms in the dictionary.

3. A constant offset in the angles (constant in appropriate units of electronic angle) in the reconstruction is expected due to an inherent ambiguity between phase imbalances and electronic angle, for example, in linear and planar arrays. This bias is corrected with an independent algorithm, optionally with the angular bias determination algorithm 14 on determination of angular bias or with any other method for extrinsic calibration.

4. The phase imbalances for each virtual transmitting and receiving antenna channel are fitted as a pre-multiplying diagonal matrix using least squares (meaning assuming that the phase imbalances are constant across a few snapshots or coherent processing intervals).

5. The transmitting and receiving phase imbalances (phase imbalance data 11) are obtained using, for example, a rank-one approximation, for example by using singular value decomposition.

6. The noise variance associated to each virtual transmitting and receiving antenna channel (noise variance data 12) are obtained averaging the residual formed by subtracting the array measurement minus the reconstructed signal (without phase imbalance correction).

7. The contributions of the antenna elements 3, 4 to the noise variance are obtained using a rank-one approximation, for example, using singular value decomposition. (The split between Tx and Rx noise variance is valid up to a factor that is unnecessary for the method.)

8. The estimation of the antenna positions (antenna position data 13) is performed if a specific condition is satisfied on the amplitudes of the targets at a given range-Doppler bin. Specifically at the output of the sparse reconstruction, it is checked if the amplitudes of the sources are constant across some snapshots. In particular, this allows to determine the number of sources, necessary for the method of maximum likelihood to estimate the positions. Such conditions can be satisfied in static scenarios of interest like gas or charging stations or stopping times in cross roads or traffic lights. Further nuanced conditions can help the performance, such as the presence of a single source or if the angles are near the center of the field of view, which makes the problem less ambiguous for the search of antenna positions.

9. With said snapshots, the maximum likelihood method is applied for global optimization over positions of transmitting and receiving antenna elements 3, 4, possibly including a search of the angle or angles in a small neighborhood of the initial estimates.

In summary, the key elements of the invention are:

- Step in the iterative process including the rank-one approximation (or decomposition) into Tx and Rx phase imbalances (up to initial phase)
- Step in the iterative processes including the rank-one decomposition into Tx and Rx noise variances (up to common factor)
- Step in the iterative process with explicit constraint

**Bezugszeichenliste**

| | |
|---|---|
| 1 | vehicle |
| 2 | radar device |
| 3 | transmitting antenna elements |
| 4 | receiving antenna elements |
| 5 | control unit |
| 6 | radar data |
| 7 | range-Doppler processing |
| 8 | constant false alarm rate detector |
| 9 | spectral phase data |
| 10 | auto-calibration algorithm |
| 11 | phase imbalance data |
| 12 | noise variance data |
| 13 | antenna position data |
| 14 | angular bias determination algorithm |
| 15 | sparse reconstruction |
| 16 | phase imbalance determination algorithm |
| 17 | Noise variance determination algorithm |
| 18 | Antenna apposition determination algorithm |
| 19 | parametrization |
| 20 | input data |
| S1-S11 | steps |

**Claims**

1. Method for intrinsic calibration of a radar device (2) for a vehicle (1), wherein the radar device (2) is a multiple input multiple output radar array system comprising multiple transmitting antenna elements (3) and multiple receiving antenna elements (4), wherein the method comprises:

- providing (S1) radar data (6) describing an object positioned in a coverage area of the radar device (2) by means of the radar device (2);
- processing (S2, S3) the provided radar data to determine spectral phase data (9) describing a spectral phase for all pairs of transmitting and receiving antenna elements (3, 4) of the radar device (2) at a selected range-Doppler bin

- applying (S4) an auto-calibration algorithm (10) on the determined spectral phase data (9) to estimate at least phase imbalance data (11), wherein the phase imbalance data (11) describe a phase imbalance regarding the transmitting and receiving antenna elements (3, 4) and the auto-calibrating algorithm (10) comprises a sparse reconstruction (15) of angle values provided by the radar data (6) and an application of a phase imbalance determination algorithm (16) on the reconstructed angle values;
- calibrating (S5) the radar device (2) under consideration of the estimated phase imbalance data (11);

and either

wherein the phase imbalance determination algorithm (16) comprises fitting estimated phase imbalance data for each pair of transmitting and receiving antenna elements (3, 4) as a pre-multiplying diagonal matrix under consideration of the sparse reconstruction (15) and comprises factorizing the estimated phase imbalance data into contributions of a respective transmitting or receiving antenna of the multiple respective antenna elements (3, 4) by applying a rank-one approximation; or

wherein the auto-calibration algorithm (10) comprises whitening (S9) of the determined spectral phase data (9), and the phase imbalance determination algorithm (16) comprises fitting the whitened spectral phase data using a model that takes into account the product form of phase imbalances of the transmitting and receiving antenna elements (3, 4) in virtual antenna channels.

2. Method according to the first alternative of claim 1, wherein the auto-calibration algorithm (10) comprises whitening (S9) of the determined spectral phase data (9) and
the phase imbalance determination algorithm (16) comprises fitting the estimated phase imbalance data for each pair of transmitting and receiving antenna elements (3, 4) as the pre-multiplying diagonal matrix under consideration of the whitened spectral phase data (9).

3. Method according to the second alternative of claim 1, , wherein using the model results in non-linear equations which are solvable by applying a Newton method or fixed-point iterations.

4. Method according to any of the preceding claims, wherein applying the auto-calibration algorithm (10) comprises determining noise variance data (12) describing a noise variance of each transmitting and receiving antenna element (3, 4).

5. Method according to claim 4, wherein the determination of the noise variance data (12) comprises applying a rank-one approximation and is in particular performed under consideration of the sparse reconstruction (15).

6. Method according to any of the preceding claims, wherein applying the auto-calibration algorithm (10) comprises determining antenna position data (13) describing a position of each antenna comprised by the radar device (2).

7. Method according to claim 6, wherein the determination of the antenna position data (13) is performed under consideration of the sparse reconstruction (15).

8. Method according to claim 6 or 7, wherein applying the auto-calibration algorithm (10) comprises verifying (S10) weather noise power estimate data describing a noise power estimated for adjacent range-Doppler bins provided by a constant false alarm rate detector (8) are within a noise power value range or not, wherein the antenna position data (13) are only determined when the noise power estimate data are within the noise power value range.

9. Method according to any of claims 6 to 8, wherein the antenna position data (13) are determined while the radar device (2) and the object are unmoved for at least a time interval that is smaller than a threshold time interval (S11).

10. Method according to any of the preceding claims, comprising performing (S8) an angular bias determination algorithm (14) to determine angular bias data describing an angular bias of the provided radar data (6), wherein the angular bias results from ambiguity between phase imbalances and rotation in angle data provided by the radar data (6) and the angular bias determination algorithm (14) is performed on the determined spectral phase data (9), wherein radar data (6) provided by the radar device (2) are corrected under consideration of the determined angular bias data to determine corrected angle data for the object.

11. Method according to claim 10, wherein the angular bias determination algorithm (14) is performed before, during and/or after applying the auto-calibration algorithm (10).

**12.** Control unit (5) for a radar device (2) constructed to perform a method according to any of the preceding claims.

**13.** Vehicle (1) with a radar device (2) and a control unit (5) according to claim 12.

**14.** Computer program product comprising instructions which, when the program is executed by a control unit (5) according to claim 12 cause control unit (5) to carry out respective steps of a method according to claims 1 to 11.

**Patentansprüche**

**1.** Verfahren für eine intrinsische Kalibrierung einer Radarvorrichtung (2) für ein Fahrzeug (1), wobei die Radarvorrichtung (2) ein Radaranordnungssystem mit mehreren Eingängen und mehreren Ausgängen, umfassend mehrere Sendeantennenelementen (3) und mehrere Empfangsantennenelementen (4), ist, wobei das Verfahren umfasst:

- Bereitstellen (S1) von Radardaten (6), die ein Objekt beschreiben, das sich in einem Erfassungsbereich der Radarvorrichtung (2) befindet, mittels der Radarvorrichtung (2);
- Verarbeiten (S2, S3) der bereitgestellten Radardaten, um Spektralphasendaten (9), die eine Spektralphase für alle Paare von Sende- und Empfangsantennenelementen (3, 4) der Radarvorrichtung (2) in einem ausgewählten Entfernungs-Doppler-Bin beschreiben, zu bestimmen;
- Anwenden (S4) eines Autokalibrierungsalgorithmus (10) auf die bestimmten Spektralphasendaten (9), um mindestens Phasenungleichgewichtsdaten (11) zu schätzen, wobei die Phasenungleichgewichtsdaten (11) ein Phasenungleichgewicht bezüglich der Sende- und Empfangsantennenelemente (3, 4) beschreiben und der Autokalibrierungsalgorithmus (10) eine dünn besetzte Rekonstruktion (15) von Winkelwerten, die durch die Radardaten (6) bereitgestellt werden, und eine Anwendung eines Phasenungleichgewichtsbestimmungsalgorithmus (16) auf die rekonstruierten Winkelwerte umfasst;
- Kalibrieren (S5) der Radarvorrichtung (2) unter Berücksichtigung der geschätzten Phasenungleichgewichtsdaten (11);

und entweder

wobei der Phasenungleichgewichtsbestimmungsalgorithmus (16) ein Anpassen der geschätzten Phasenungleichgewichtsdaten für jedes Paar von Sende- und Empfangsantennenelementen (3, 4) als eine Vormultiplikationsdiagonalmatrix unter Berücksichtigung der dünn besetzten Rekonstruktion (15) umfasst und ein Faktorisieren der geschätzten Phasenungleichgewichtsdaten in Beiträge einer jeweiligen Sende- oder Empfangsantenne der mehreren jeweiligen Antennenelemente (3, 4) durch Anwenden einer Rang-Eins-Approximation umfasst; oder
wobei der Autokalibrierungsalgorithmus (10) ein Weißmachen (S9) der bestimmten Spektralphasendaten (9) umfasst und der Phasenungleichgewichtsbestimmungsalgorithmus (16) das Anpassen der weiß gemachten Spektralphasendaten unter Verwendung eines Modells umfasst, das die Produktform der Phasenungleichgewichte der Sende- und Empfangsantennenelemente (3, 4) in virtuellen Antennenkanälen in Betracht zieht.

**2.** Verfahren nach der ersten Alternative von Anspruch 1, wobei der Autokalibrierungsalgorithmus (10) das Weißmachen (S9) der bestimmten Spektralphasendaten (9) umfasst und der Phasenungleichgewichtsbestimmungsalgorithmus (16) das Anpassen der geschätzten Phasenungleichgewichtsdaten für jedes Paar von Sende- und Empfangsantennenelementen (3, 4) als die Vormultiplikationsdiagonalmatrix unter Berücksichtigung der weiß gemachten Spektralphasendaten (9) umfasst.

**3.** Verfahren nach der zweiten Alternative von Anspruch 1, wobei ein Verwenden des Modells zu nichtlinearen Gleichungen führt, die durch Anwenden eines Newton-Verfahrens oder Fixpunktiterationen lösbar sind.

**4.** Verfahren nach einem der vorstehenden Ansprüche, wobei das Anwenden des Autokalibrierungsalgorithmus (10) ein Bestimmen von Rauschvarianzdaten (12), die eine Rauschvarianz jedes Sende- und Empfangsantennenelements (3, 4) beschreiben, umfasst.

**5.** Verfahren nach Anspruch 4, wobei die Bestimmung der Rauschvarianzdaten (12) das Anwenden einer Rang-Eins-Approximation umfasst und insbesondere unter Berücksichtigung der dünn besetzten Rekonstruktion (15) durchgeführt wird.

**6.** Verfahren nach einem der vorstehenden Ansprüche, wobei das Anwenden des Autokalibrierungsalgorithmus (10) das Bestimmen von Antennenpositionsdaten (13), die eine Position jeder durch die Radarvorrichtung (2) umfassten Antenne beschreiben, umfasst.

**7.** Verfahren nach Anspruch 6, wobei die Bestimmung der Antennenpositionsdaten (13) unter Berücksichtigung der dünn besetzten Rekonstruktion (15) durchgeführt wird.

**8.** Verfahren nach Anspruch 6 oder 7, wobei das Anwenden des Autokalibrierungsalgorithmus (10) ein Überprüfen (S10), ob Rauschleistungsschätzdaten, die eine für angrenzende Entfernungs-Doppler-Bins geschätzte Rauschleistung beschreiben, die durch einen Detektor (8) mit konstanter Falschalarmrate bereitgestellt wird, innerhalb eines Rauschleistungswertbereichs liegen oder nicht, wobei die Antennenpositionsdaten (13) nur dann bestimmt werden, wenn die Rauschleistungsschätzdaten innerhalb des Rauschleistungswertbereichs liegen.

**9.** Verfahren nach einem der Ansprüche 6 bis 8, wobei die Antennenpositionsdaten (13) bestimmt werden, während die Radarvorrichtung (2) und das Objekt für mindestens ein Zeitintervall unbewegt sind, das kleiner als ein Schwellenzeitintervall (S11) ist.

**10.** Verfahren nach einem der vorstehenden Ansprüche, umfassend ein Durchführen (S8) eines Winkelverzerrungsbestimmungsalgorithmus (14), um Winkelverzerrungsdaten zu bestimmen, die eine Winkelverzerrung der bereitgestellten Radardaten (6) beschreiben, wobei die Winkelverzerrung aus einer Mehrdeutigkeit zwischen Phasenungleichgewichten und einer Rotation in Winkeldaten, die durch die Radardaten (6) bereitgestellt werden, resultiert und der Winkelverzerrungsbestimmungsalgorithmus (14) auf den bestimmen Spektralphasendaten (9) durchgeführt wird, wobei Radardaten (6), die durch die Radarvorrichtung (2) bereitgestellt werden, unter Berücksichtigung der bestimmten Winkelverzerrungsdaten korrigiert werden, um korrigierte Winkeldaten für das Objekt zu bestimmen.

**11.** Verfahren nach Anspruch 10, wobei der Winkelverzerrungsbestimmungsalgorithmus (14) vor, während und/oder nach dem Anwenden des Autokalibrierungsalgorithmus (10) durchgeführt wird.

**12.** Steuereinheit (5) für eine Radarvorrichtung (2), die konstruiert ist, um ein Verfahren nach einem der vorstehenden Ansprüche durchzuführen.

**13.** Fahrzeug (1) mit einer Radarvorrichtung (2) und einer Steuereinheit (5) nach Anspruch 12.

**14.** Computerprogrammprodukt, umfassend Anweisungen, die, wenn das Programm durch eine Steuereinheit (5) nach Anspruch 12 ausgeführt wird, die Steuereinheit (5) veranlassen, jeweilige Schritte eines Verfahrens nach den Ansprüchen 1 bis 11 vorzunehmen.

**Revendications**

**1.** Procédé d'étalonnage intrinsèque d'un dispositif radar (2) pour un véhicule (1), dans lequel le dispositif radar (2) est un système de réseau radar à entrées multiples et sorties multiples comprenant de multiples éléments d'antenne d'émission (3) et de multiples éléments d'antenne de réception (4), dans lequel le procédé comprend :

- la fourniture (S1) de données radar (6) décrivant un objet positionné dans une zone de couverture du dispositif radar (2) au moyen du dispositif radar (2) ;
- le traitement (S2, S3) des données radar fournies pour déterminer des données de phase spectrale (9) décrivant une phase spectrale pour toutes les paires d'éléments d'antenne d'émission et de réception (3, 4) du dispositif radar (2) au niveau d'un intervalle distance-Doppler sélectionné
- l'application (S4) d'un algorithme d'auto-étalonnage (10) sur les données de phase spectrale (9) déterminées pour estimer au moins des données de déséquilibre de phase (11), dans lequel les données de déséquilibre de phase (11) décrivent un déséquilibre de phase entre les éléments d'antenne d'émission et de réception (3, 4) et l'algorithme d'auto-étalonnage (10) comprend une reconstruction éparse (15) des valeurs d'angle fournies par les données radar (6) et une application d'un algorithme de détermination de déséquilibre de phase (16) sur les valeurs d'angle reconstruites ;
- l'étalonnage (S5) du dispositif radar (2) en tenant compte des données de déséquilibre de phase (11) estimées ;

et soit

dans lequel l'algorithme de détermination de déséquilibre de phase (16) comprend l'ajustement de données de déséquilibre de phase estimées pour chaque paire d'éléments d'antenne d'émission et de réception (3, 4) sous la forme d'une matrice diagonale de pré-multiplication en tenant compte de la reconstruction éparse (15) et comprend la factorisation des données de déséquilibre de phase estimées en contributions d'une antenne d'émission ou de réception respective des multiples éléments d'antenne (3, 4) respectifs par l'application d'une approximation de rang un ; soit

dans lequel l'algorithme d'auto-étalonnage (10) comprend le blanchiment (S9) des données de phase spectrale (9) déterminées, et l'algorithme de détermination de déséquilibre de phase (16) comprend l'ajustement des données de phase spectrale blanchies à l'aide d'un modèle qui prend en compte la forme de produit des déséquilibres de phase des éléments d'antenne d'émission et de réception (3, 4) dans des canaux d'antenne virtuels.

2.  Procédé selon la première alternative de la revendication 1, dans lequel l'algorithme d'auto-étalonnage (10) comprend le blanchiment (S9) des données de phase spectrale (9) déterminées et l'algorithme de détermination de déséquilibre de phase (16) comprend l'ajustement des données de déséquilibre de phase estimées pour chaque paire d'éléments d'antenne d'émission et de réception (3, 4) en tant que la matrice diagonale de pré-multiplication en tenant compte des données de phase spectrale (9) blanchies.

3.  Procédé selon la seconde alternative de la revendication 1, dans lequel l'utilisation du modèle résulte en des équations non linéaires qui peuvent être résolues par l'application d'un procédé de Newton ou d'itérations à point fixe.

4.  Procédé selon l'une quelconque des revendications précédentes, dans lequel l'application de l'algorithme d'auto-étalonnage (10) comprend la détermination de données de variance de bruit (12) décrivant une variance de bruit de chaque élément d'antenne d'émission et de réception (3, 4).

5.  Procédé selon la revendication 4, dans lequel la détermination des données de variance de bruit (12) comprend l'application d'une approximation de rang un et est en particulier réalisée en tenant compte de la reconstruction éparse (15).

6.  Procédé selon l'une quelconque des revendications précédentes, dans lequel l'application de l'algorithme d'auto-étalonnage (10) comprend la détermination de données de position d'antenne (13) décrivant une position de chaque antenne comprise par le dispositif radar (2).

7.  Procédé selon la revendication 6, dans lequel la détermination des données de position d'antenne (13) est réalisée en tenant compte de la reconstruction éparse (15).

8.  Procédé selon la revendication 6 ou 7, dans lequel l'application de l'algorithme d'auto-étalonnage (10) comprend la vérification (S10) de si des données d'estimation de puissance de bruit décrivant une puissance de bruit estimée pour des intervalles Doppler adjacents fournis par un détecteur de taux de fausse alarme constant (8) se situent ou non au sein d'une plage de valeurs de puissance de bruit, dans lequel les données de position d'antenne (13) ne sont déterminées que lorsque les données d'estimation de puissance de bruit se situent au sein de la plage de valeurs de puissance de bruit.

9.  Procédé selon l'une quelconque des revendications 6 à 8, dans lequel les données de position d'antenne (13) sont déterminées alors que le dispositif radar (2) et l'objet sont immobiles pendant au moins un laps de temps qui est inférieur à un laps de temps seuil (S11).

10. Procédé selon l'une quelconque des revendications précédentes, comprenant la réalisation (S8) d'un algorithme de détermination de biais angulaire (14) pour déterminer des données de biais angulaire décrivant un biais angulaire des données radar (6) fournies, dans lequel le biais angulaire résulte d'une ambiguïté entre les déséquilibres de phase et la rotation dans les données d'angle fournies par les données radar (6) et l'algorithme de détermination de biais angulaire (14) est réalisé sur les données de phase spectrale (9) déterminées, dans lequel les données radar (6) fournies par le dispositif radar (2) sont corrigées en tenant compte des données de biais angulaire déterminées afin de déterminer des données d'angle corrigées pour l'objet.

11. Procédé selon la revendication 10, dans lequel l'algorithme de détermination de biais angulaire (14) est réalisé avant, pendant et/ou après l'application de l'algorithme d'auto-étalonnage (10).

12. Unité de commande (5) pour un dispositif radar (2) construit pour réaliser un procédé selon l'une quelconque des revendications précédentes.

13. Véhicule (1) équipé d'un dispositif radar (2) et d'une unité de contrôle (5) selon la revendication 12.

14. Produit-programme informatique comprenant des instructions qui, lorsque le programme est exécuté par une unité de commande (5) selon la revendication 12, amènent l'unité de commande (5) à mettre en œuvre les étapes respectives d'un procédé selon les revendications 1 à 11.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150139046 A1
- DE 102019200612 A1
- DE 102020008040 A1
- CN 113189592 A
- CN 112649799 A
- CN 106443610 A

**Non-patent literature cited in the description**

- **X. TIAN et al.** Pragmatic Approach to Phase Self-Calibration for Planar Array Millimeter-Wave MIMO Imaging. *IEEE Transactions on Instrumentation and Measurement*, 2021, vol. 70, 1-11
- **M. PESAVENTO** ; **A. GERSHMAN**. Maximum-likelihood direction-of-arrival estimation in the presence of unknown nonuniform noise. *IEEE Transactions on Signal Processing*, 2001, vol. 49 (7), 1310-1324